(19) **Europäisches Patentamt**
**European Patent Office**
**Office européen des brevets**

(11) **EP 3 461 616 B1**

(12) **FASCICULE DE BREVET EUROPEEN**

(45) Date de publication et mention de la délivrance du brevet:
**03.06.2020 Bulletin 2020/23**

(51) Int Cl.:
*B29C 49/64* *(2006.01)*     *B29C 49/06* *(2006.01)*
*B29C 49/68* *(2006.01)*     *B29C 49/36* *(2006.01)*
*B29K 67/00* *(2006.01)*     *B29K 105/00* *(2006.01)*
*B29L 31/00* *(2006.01)*

(21) Numéro de dépôt: **18190971.4**

(22) Date de dépôt: **27.08.2018**

(54) **PROCEDE ET UNITE DE CONDITIONNEMENT THERMIQUE, QUI COMPREND DES EMETTEURS A ALLUMAGE ET EXTINCTION PROGRESSIFS**

VERFAHREN UND EINHEIT ZUR THERMISCHEN KONDITIONIERUNG, DIE STRAHLER MIT PROGRESSIVER BELEUCHTUNG UND ABSCHALTUNG UMFASST

THERMAL CONDITIONING METHOD AND UNIT, WHICH INCLUDES PROGRESSIVE ON/OFF TRANSMITTERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.08.2017 FR 1757925**

(43) Date de publication de la demande:
**03.04.2019 Bulletin 2019/14**

(73) Titulaire: **Sidel Participations**
**76930 Octeville-sur-Mer (FR)**

(72) Inventeurs:
• **PASQUIER, Hervé**
**76930 Octeville sur Mer (FR)**
• **LAHOGUE, Yoann**
**76930 Octeville sur Mer (FR)**
• **SOUFFES, Denis**
**76930 Octeville sur Mer (FR)**
• **FEUILLOLEY, Guy**
**76930 Octeville sur Mer (FR)**

(74) Mandataire: **Sidel Group**
**c/o Sidel Participations**
**Avenue de la Patrouille de France**
**76930 Octeville-sur-mer (FR)**

(56) Documents cités:
**US-A1- 2014 305 919    US-A1- 2017 136 682**
**US-A1- 2017 215 232    US-B2- 8 921 808**

## Description

L'invention a trait à la fabrication des récipients à partir de préformes en matière plastique telle que PET.

Cette fabrication comprend ordinairement :

- une première phase de conditionnement thermique (également appelée chauffe) des préformes, conduite au sein d'une unité de conditionnement thermique (également appelée four) définissant une cavité de chauffe, cette première phase consistant à faire défiler les préformes dans la cavité pour les amener à une température supérieure à la température de transition vitreuse de la matière (laquelle est, pour le PET, d'environ 80°C) ;
- une deuxième phase de formage des récipients à partir des préformes, conduite au sein d'une unité de formage équipée de moules à l'empreinte du modèle de récipient à former, cette deuxième phase consistant à introduire chaque préforme chaude dans un moule et à lui injecter un fluide (notamment un gaz, typiquement de l'air) sous pression pour la plaquer contre le moule et lui conférer ainsi l'empreinte du modèle de récipient.

Les fours classiques sont équipés de lampes à incandescence de type halogène, qui rayonnent suivant la loi de Planck sur un spectre continu, associées à des réflecteurs en céramique.

Avant de lancer toute production, il convient de préchauffer le four, pour amener les lampes et les réflecteurs à une température convenable susceptible de conférer aux préformes un profil thermique permettant de mener ensuite à bien le formage.

Ce préchauffage est lent et nécessite des réglages délicats.

Une technologie de chauffe alternative a cependant vu le jour récemment, fondée sur l'utilisation d'émetteurs équipés de sources de rayonnement électromagnétique monochromatique (notamment des lasers), dont le spectre d'émission s'étend pour l'essentiel dans le domaine de l'infrarouge. Un four fonctionnant à l'aide de cette technologie, illustrée par la demande de brevet européen EP3119582 (Sidel Participations), présente de nombreux avantages par rapport à un four classique à lampes halogènes. Entre autres, ce type de four :

- rayonne peu de chaleur et ne nécessite donc pas de ventilation, à la différence d'un four halogène ;
- permet de chauffer les préformes selon des profils thermiques plus précis ;
- ne nécessite pas de préchauffe.

Ce dernier avantage est déterminant en termes de productivité : il devient possible de démarrer une production sans préchauffage, et donc sans délai ; il suffit en effet de mettre en route l'unité de formage, d'allumer l'unité de conditionnement thermique (c'est-à-dire d'alimenter en courant les émetteurs) et d'initier le défilement d'un train de préformes.

On note cependant des défauts de qualité pendant les phases transitoires du début et de la fin de production.

De fait, on constate, en début de production, qu'au moins la première préforme (dite de tête) entrant dans le four présente un profil de chauffe insatisfaisant. Plus exactement, la préforme de tête apparaît surchauffée, c'est-à-dire que sa température moyenne est trop élevée, et son formage conduit à un récipient de mauvaise qualité qui doit être mis au rebut. Il en va souvent de même des quelques préformes qui suivent la préforme de tête.

Ce défaut est également constaté, en fin de production, au moins sur la dernière préforme (dite de queue) du train de même (souvent) que sur les quelques préformes qui la précèdent.

L'invention vise à proposer une solution permettant de remédier à ce problème, grâce à un procédé de conditionnement thermique qui permette de conférer aux préformes de tête et de queue un profil thermique acceptable, et dont le formage conduise par conséquent à des récipients ayant la qualité requise.

A cet effet, il est proposé, en premier lieu, un procédé de conditionnement thermique d'un train de préformes de récipients en matière plastique au sein d'une unité de conditionnement thermique définissant une cavité de chauffe et équipée d'une rangée d'émetteurs adjacents bordant la cavité et comprenant chacun une pluralité de sources de rayonnement électromagnétique monochromatique,

chaque préforme étant fixée à un support individuel circulant d'amont en aval le long d'un trajet prédéterminé dans la cavité, le train de préformes se terminant côté aval par une préforme de tête ou, côté amont, par une préforme de queue,

chaque émetteur pouvant adopter un état allumé, dans lequel les sources émettent un rayonnement dans la cavité, et un état éteint, dans lequel les sources n'émettent pas de rayonnement dans la cavité,

ce procédé comportant les opérations suivantes :

- déterminer périodiquement la position, sur le trajet, de la préforme de tête ou, respectivement, de la préforme de queue ;
- au fur et à mesure du déplacement du train de préformes, allumer progressivement les émetteurs situés en aval et au voisinage de la préforme de tête ou, respectivement, éteindre progressivement les émetteurs situés en amont et au voisinage de la préforme de queue.

La détermination de la position de la préforme de tête ou de la préforme de queue peut être réalisée au moyen d'un ou plusieurs capteurs, tel qu'un codeur ou une cellule de détection.

Ce procédé comprend par ex. l'allumage de l'émetteur situé immédiatement en aval de la préforme de tête, les émetteurs situés en aval de cet émetteur étant maintenus éteints et les émetteurs situés en amont de cet émetteur étant maintenus allumés.

Ce procédé peut comprendre l'augmentation progressive, d'amont en aval, de puissances électriques fournies à plusieurs émetteurs situés en aval de la préforme de tête à l'approche de celle-ci, jusqu'à atteindre une puissance nominale au plus tôt au passage de celle-ci.

L'état allumé des émetteurs est de préférence maintenu tant que le passage de la préforme de queue n'est pas détecté.

De manière correspondante, le procédé peut comprendre par ex. le maintien allumé de l'émetteur situé immédiatement en amont de la préforme de queue, les émetteurs situés en amont de cet émetteur étant éteint et les émetteurs situés en aval de cet émetteur étant maintenus allumés.

Le procédé peut comprendre la diminution progressive, d'amont en aval, des puissances électriques fournies à plusieurs émetteurs situés en amont de la préforme de queue au fur et à mesure de l'éloignement de celle-ci, d'une puissance nominale jusqu'à l'extinction.

Il est proposé, en deuxième lieu, une unité de conditionnement thermique de préformes de récipients en matière plastique, qui définit une cavité de chauffe et est équipée :

- d'une rangée d'émetteurs adjacents bordant la cavité et comprenant chacun une pluralité de sources de rayonnement électromagnétique monochromatique, chaque émetteur pouvant adopter un état allumé, dans lequel les sources émettent un rayonnement dans la cavité, et un état éteint, dans lequel les sources n'émettent pas de rayonnement dans la cavité ;
- d'une série de supports individuels pour les préformes, circulant d'amont en aval le long d'un trajet prédéterminé dans la cavité ;
- d'un ou plusieurs capteurs propre(s) à permettre la détermination périodique de la position, sur le trajet, d'une préforme de tête, ou, respectivement, d'une préforme de queue au sein d'un train de préformes défilant dans la cavité ;
- d'une unité de contrôle programmée pour allumer progressivement les émetteurs situés en aval et au voisinage de la préforme de tête ou, respectivement, éteindre progressivement les émetteurs situés en amont et au voisinage de la préforme de queue.

Les sources sont de préférence configurées pour émettre dans le domaine infrarouge. Il s'agit par exemple de diodes VCSEL.

D'autres objets et avantages de l'invention apparaîtront à la lumière de la description d'un mode de réalisation, faite ci-après en référence aux dessins annexés dans lesquels :

- la **FIG.1** est une vue en perspective montrant une unité de traitement de préformes de récipients, comprenant une série de modules de chauffe adjacents ;
- la **FIG.2** est une vue partielle en perspective, selon un autre angle d'observation, de l'unité de traitement de la **FIG.1** fonctionnant en régime transitoire d'allumage, lors duquel les modules de chauffe sont progressivement allumés ;
- la **FIG.3** est une vue similaire à la **FIG.2,** illustrant le fonctionnement de l'unité de traitement en régime permanent ;
- la **FIG.4** est une vue similaire à la **FIG.2,** montrant l'unité de traitement fonctionnant en régime transitoire d'extinction, lors duquel les modules de chauffe sont progressivement éteints ;
- la **FIG.5** est une vue schématique illustrant la commande d'allumage et d'extinction des modules de chauffe.

On a représenté sur les dessins une unité **1** de conditionnement thermique de préformes **2** de récipients en matière plastique, par ex. en polytéréphtalate d'éthylène (PET).

Chaque préforme **2** présente un corps **3** sensiblement cylindrique, fermé à une extrémité par un fond **4** hémisphérique et se prolongeant à une extrémité opposée par un col **5** ouvert dont la forme est définitive et qui est destiné à former un buvant sur le récipient.

Les préformes **2** sont représentées avec leur col **5** orienté vers le haut, mais elles pourraient être orientées col en bas.

L'unité **1** de conditionnement thermique, ci-après dénommée plus simplement « four », est configurée pour chauffer les préformes **2 à** une température supérieure à la température de transition vitreuse de leur matière. Dans le cas du PET, dont la température de transition vitreuse est d'environ 80°C, les préformes **2** sont par ex. chauffées à une température supérieure ou égale à 100°C.

Après avoir été ramollie par chauffage au sein du four **1,** chaque préforme **2** est destinée à subir dans un moule une opération de formage (par ex. de soufflage ou d'étirage soufflage) pour former un récipient tel qu'une bouteille ou un flacon.

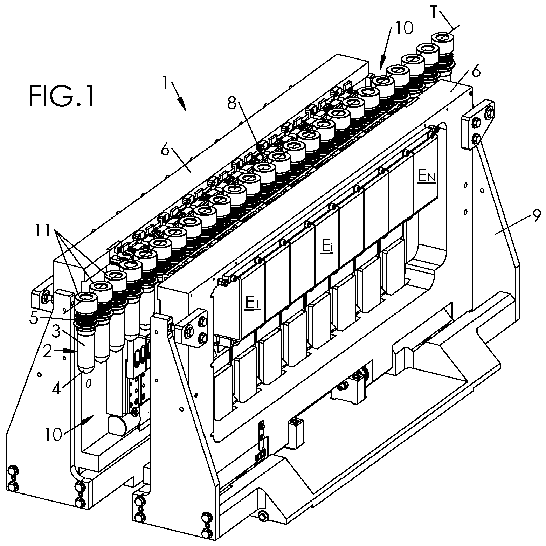

Comme cela est visible notamment sur la **FIG.1,** le four **1** comprend deux parois **6** longitudinales opposées ayant des faces **7** internes en regard et qui définissent ensemble une cavité **8** au sein de laquelle défilent les préformes **2.** Comme on le voit sur la **FIG.1,** le four **1** comprend un bâti **9** sur lequel sont montées les parois **6** longitudinales.

Les parois **6** longitudinales définissent entre elles, à au moins une (ou à chaque) extrémité de la cavité **8,** une ouverture **10** pour le passage des préformes **2.** En pratique, la cavité **8** présente (comme illustré sur la **FIG.1**) deux extrémités opposées définissant chacune une ouverture **10** pour le passage des préformes **2.**

Chaque préforme **2** est fixée (ici par son col **5**) à un support **11** individuel, appelé « tournette », qui circule d'amont en aval le long d'un trajet **T** prédéterminé dans la cavité **8.** En pratique, les tournettes **11** sont montées sur une chaîne qui circule sur des roues dont l'une au moins est entraînée en rotation par un moteur.

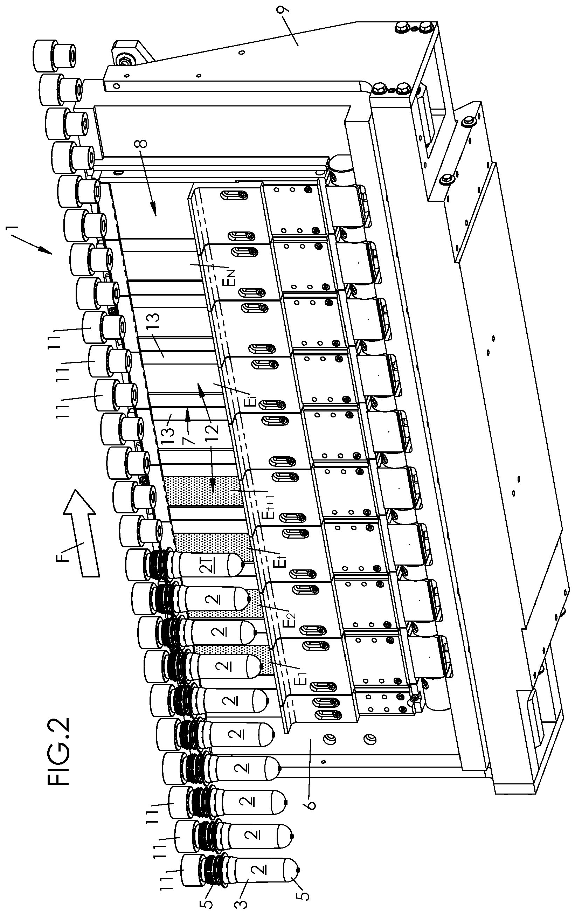

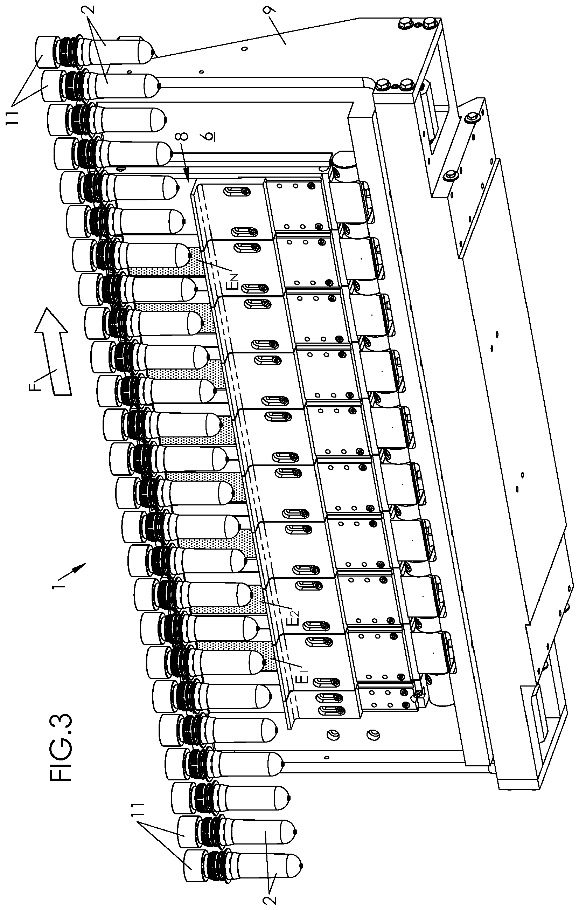

Dans l'exemple illustré sur les **FIG.2, FIG.3** et **FIG.4,** le trajet **T** est globalement linéaire (comme suggéré par la flèche **F** sur la **FIG.2**), mais il pourrait être (au moins localement) courbe, notamment selon la configuration des lieux dans lesquels est installée le four **1.** Dans l'exemple illustré sur la **FIG.1,** les préformes **2** défilent dans la cavité **8** sur une rangée unique, mais elles pourraient défiler sur plusieurs rangées, comme cela est décrit dans la demande EP3119582 précitée.

Chaque préforme **2** est en outre entraînée en rotation autour de son axe par sa tournette **11.**

L'une au moins des parois **6** comprend une rangée d'émetteurs adjacents bordant la cavité et comprenant chacun une pluralité de sources de rayonnement électromagnétique. On note N (N un entier strictement supérieur à 1) le nombre d'émetteurs, que l'on note chacun **E$_i$** (i un entier tel que $1 \le i \le N$, i croissant de l'amont vers l'aval).

Les sources de chaque émetteur **E$_i$** sont choisies pour émettre un rayonnement monochromatique, dans le domaine de l'infrarouge.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle ayant un spectre d'émission en fréquence qui s'étend sur une bande de largeur spectrale faible mais non nulle, centrée sur une fréquence principale où l'intensité du rayonnement est maximale. Pour les besoins de la présente demande, on considère comme monochromatique une telle source réelle. De même, pour les besoins de la présente description, on considère comme monochromatique une source multimode, c'est-à-dire émettant sur un spectre discret comprenant plusieurs bandes étroites centrées sur des fréquences principales distinctes.

L'avantage d'un rayonnement monochromatique est que, bien choisi, il peut être concentré sur une (ou plusieurs) fréquence(s) pour laquelle (ou pour lesquelles) le comportement thermique du matériau des préformes **2** est, en termes d'absorption, particulièrement intéressant.

A titre d'exemple, pour obtenir une chauffe rapide en surface des préformes **2,** on peut choisir une (ou plusieurs) fréquence(s) dans l'infrarouge pour laquelle (pour lesquelles) le matériau est très absorbant. A contrario, pour obtenir une chauffe plus lente mais plus homogène dans l'épaisseur des préformes **2,** on peut choisir une (ou plusieurs) fréquence(s) pour laquelle (pour lesquelles) le matériau est relativement moins absorbant.

En pratique, les sources dont sont pourvus les émetteurs **E$_1$...E$_N$** sont des lasers (par exemple des diodes laser) émettant dans l'infrarouge et organisés par juxtaposition et superposition pour former une ou plusieurs matrices.

En l'espèce, chaque matrice peut être une matrice de diodes laser à cavité verticale émettant par la surface (VCSEL), chaque diode émettant par exemple un faisceau laser d'une puissance unitaire de l'ordre du Watt à une longueur d'onde d'environ 1 $\mu$m.

Ces sources sont radiantes, c'est-à-dire que le rayonnement émis est transmis aux préformes **2** sans que l'air serve de vecteur de transmission.

Dans l'exemple illustré sur les **FIG.2, FIG.3** et **FIG.4,** où à des fins de clarté on n'a représenté qu'une paroi **6,** la (ou chaque) paroi 6 est équipée de plusieurs émetteurs **E$_i$** alignés côte à côte.

Dans ce même exemple, chaque émetteur **E$_i$** comprend une fenêtre **12** au travers de laquelle rayonnent les sources, et une paire de réflecteurs **13** qui bordent cette fenêtre **12,** de part et d'autre. Chaque réflecteur **13** est par exemple une plaque en métal poli (ou revêtue d'une couche métallisée) présentant un état de surface de qualité spéculaire.

Chaque émetteur **E$_i$** peut adopter un état allumé (en grisé sur les **FIG.2, FIG.3, FIG.4** et **FIG.5**), dans lequel ses sources émettent effectivement un rayonnement dans la cavité **8,** et un état éteint (en blanc sur les **FIG.2, FIG.3, FIG.4** et **FIG.5,** dans laquelle ses sources n'émettent pas de rayonnement dans la cavité **8.**

Chaque émetteur **E$_i$** délimite dans la cavité **8** un volume élémentaire, ci-après dénommé cellule, que l'on note **C$_i$** (i le même indice que ci-dessus). La somme des cellules **C$_i$** constitue le volume interne de la cavité **8.**

Le four **1** comprend pour chaque émetteur **E$_i$** une alimentation **14** électrique par laquelle il peut être fourni à l'émetteur **E$_i$** une énergie électrique que les sources convertissent en un champ électromagnétique rayonné dans la cavité **8.**

En faisant l'hypothèse que chaque émetteur **E$_i$** offre un rendement, (noté $R_i$) constant, la puissance (notée $P_C^i$) du champ électromagnétique rayonné par cet émetteur **E$_i$** est liée par une relation de proportionnalité à la puissance électrique (notée $P_E^i$) qui lui est fournie :

$$P_C^i = R_i \cdot P_E^i$$

Le four **1** comprend avantageusement, pour chaque alimentation **14** électrique, un variateur **15** de puissance. Ce variateur **15** peut être analogique, ou, de préférence, électronique. Dans ce cas, le four **1** comprend une unité **16** de contrôle électronique (ou informatique) qui pilote chaque variateur **15.**

Les variateurs **15** peuvent être pilotés simultanément et de manière automatique par l'unité **16** de contrôle, qui à cet effet comprend un programme informatique implémenté sur une mémoire reliée à (et commandée par) un microprocesseur.

La puissance électrique fournie à chaque émetteur $E_i$ présente une valeur nominale $P^i_{Enom}$ non nulle, et une valeur minimale $P^i_{Emin}$ qui peut être nulle.

A la puissance nominale $P^i_{Enom}$ fournie correspond une puissance électromagnétique nominale $P^i_{Cnom}$ rayonnée par chaque émetteur $E_i$ :

$$P^i_{Cnom} = R_i \cdot P^i_{Enom}$$

De même, à la puissance minimale $P^i_{Emin}$ fournie correspond une puissance électromagnétique minimale notée $P^i_{Cmin}$ rayonnée par chaque émetteur $E_i$ :

$$P^i_{Cmin} = R_i \cdot P^i_{Emin}$$

Dès lors que la puissance $P^i_E$ électrique fournie (et donc la puissance $P^i_C$ électromagnétique) est non nulle, l'émetteur $E_i$ est dans un état dit « allumé », c'est-à-dire que ses sources émettent un rayonnement dans la cavité **8**.

La puissance $P^i_{Cnom}$ électromagnétique nominale est la puissance qui, en régime stationnaire (c'est-à-dire en pleine production et à la cadence normale de production) doit être rayonnée par chaque émetteur $E_i$ pour garantir qu'à la sortie de la cavité **8** chaque préforme **2** présente un profil de température acceptable permettant de former un récipient de qualité acceptable.

A contrario, $P^i_{Cmin}$ est nulle si $P^i_{Emin}$ est nulle. Dans ce cas, l'émetteur $E_i$ est dans un état dit « éteint », c'est-à-dire que ses sources n'émettent aucun rayonnement dans la cavité **8**.

Pour chaque émetteur $E_i$, le variateur **15** permet de régler la puissance $P^i_E$ électrique fournie, à une fraction de la puissance $P^i_{Enom}$ électrique nominale :

$$P^i_E = K_i \cdot P^i_{Enom}$$

où $K_i$ est un coefficient de proportionnalité, nombre réel positif ou nul (correspondant à l'extinction dans ce dernier cas) associé à l'émetteur $E_i$.

Les préformes **2** sont transportées par train, chaque train comprenant une série de préformes **2** adjacentes et se terminant, côté aval, par une préforme **2T** de tête ou, côté amont, par une préforme **2Q** de queue.

On notera qu'un train de préformes **2** peut avoir une grande longueur, la préforme **2Q** de queue se présentant de nombreuses heures (voire plusieurs jours) après la préforme **2T** de tête.

En début de production, un train de préformes **2** se termine côté aval par une préforme **2T** de tête. Comme illustré sur la **FIG.2**, en aval de la préforme **2T** de tête, les tournettes **11** sont vides. En début de production, la préforme **2T** de tête est la première à entrer dans le four **1**.

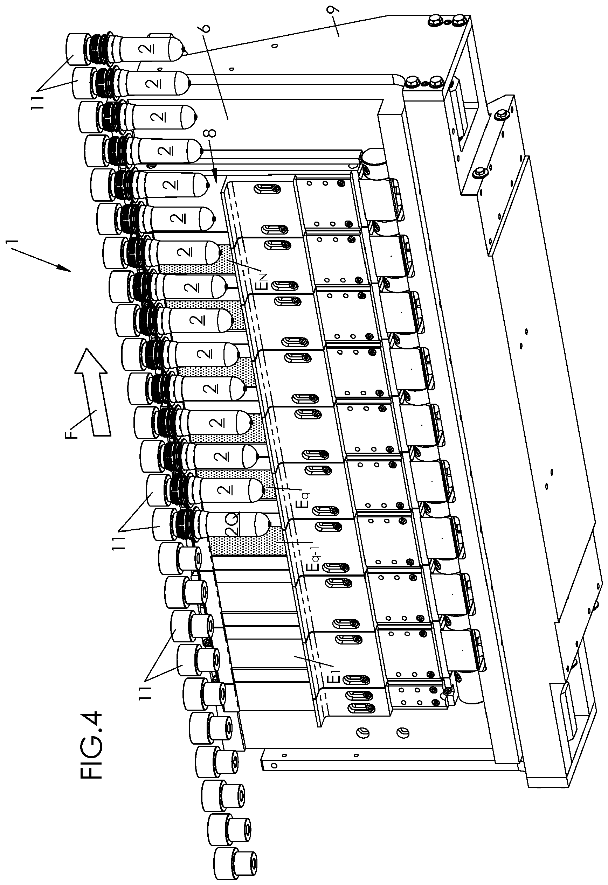

En fin de production, un train de préformes **2** se termine par une préforme **2Q** de queue. Comme illustré sur la **FIG.4**, en amont de la préforme de queue **2Q**, les tournettes **11** sont vides. En fin de production, la préforme **2Q** de queue est la dernière à quitter le four **1**.

Ordinairement, en début de production, tous les émetteurs $E_1...E_N$ sont allumés simultanément avant l'entrée dans le four **1** de la préforme **2T** de tête.

De même, en fin de production, tous les émetteurs $E_1...E_N$ sont éteints simultanément après la sortie du four **1** de la préforme **2Q** de queue.

Ce fonctionnement n'est pas satisfaisant : d'une part, il ne permet pas d'optimiser la consommation électrique du four **1** ; deuxièmement, il s'avère qu'en début de production la préforme **2T** de tête est surchauffée (c'est souvent le cas de quelques préformes **2** qui la suivent), et que, de la même manière, en fin de production, la préforme **2Q** de queue est surchauffée (c'est souvent le cas de quelques préformes **2** qui la précèdent).

Pour éviter ce désagrément, il est proposé, en début de production, d'allumer progressivement, d'amont en aval, au fur et à mesure du déplacement du train de préformes **2,** les émetteurs $E_j...E_k$ situés en aval et au voisinage de la préforme **2T** de tête (supposée située au droit d'un émetteur $E_t$, **FIG.2**), où t, j et k sont des entiers inférieurs ou égaux à N, avec :

$$1 \leq j \leq N$$

$$j \leq t \text{ ou } j \geq t$$

$$k > t$$

L'émetteur $E_t$ situé au droit de la préforme **2T** de tête n'atteint pas nécessairement sa puissance nominale à l'instant même du passage de la préforme **2T** de tête. Il peut en aller de même d'un ou plusieurs émetteurs $E_j$ situés en amont de la préforme **2T** de tête (cas où $j \leq t$).

De même, en fin de production, il est prévu d'éteindre progressivement, d'amont en aval, au fur et à mesure du déplacement du train de préformes **2**, les émetteurs $E_l...E_m$ situés en amont et au voisinage de la préforme **2Q** de queue (supposée située au droit d'un émetteur $E_q$, **FIG.4**), où q, l, m sont des entiers inférieurs ou égaux à N, avec :

$$q < N$$

$$l < q$$

$$m \leq t \ ou \ m \geq t$$

L'émetteur $E_q$ situé au droit de la préforme **2Q** de queue n'a pas nécessairement sa puissance nominale à l'instant du passage de la préforme **2Q** de tête. Il peut en aller de même d'un ou plusieurs émetteurs $E_m$ situés en aval de la préforme **2Q** de tête (cas où $m \geq t$).

Quoi qu'il en soit, il est nécessaire que soit connue la position, le long du trajet **T**, de la préforme **2T** de tête ou, respectivement, de la préforme **2Q** de queue.

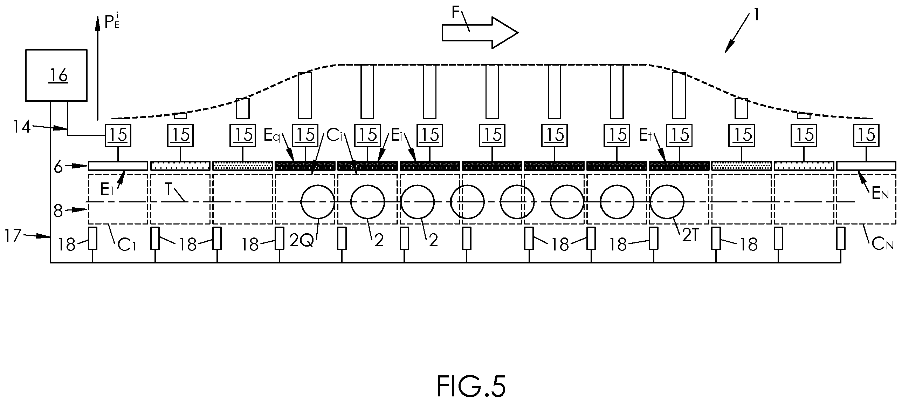

C'est pourquoi, comme schématisé sur la **FIG.5**, le four **1** est équipé d'un système **17** de détection, configuré pour déterminer de manière périodique la position, sur le trajet **T**, de la préforme **2T** de tête ou de la préforme **2Q** de queue.

Dans le cas où les tournettes **11** sont montées sur une chaîne circulant sur une roue, cette roue peut être équipée d'un codeur qui en fournit la position angulaire. A partir d'une position initiale détectée pour la préforme **2T** de tête (par ex. au moyen d'une cellule située à la sortie d'un système d'alimentation des préformes **2**), et en connaissant le pas, c'est-à-dire la distance entre deux tournettes **11** (et donc entre deux préformes **2**) successives, il est aisé de calculer la position instantanée de la préforme **2T** de tête (ou de la préforme **2Q** de queue) le long du trajet **T**.

En variante, et comme illustré, ce système **17** peut toutefois comprendre au moins un capteur **18** relié à l'unité **16** de contrôle, et un module de calcul (typiquement sous forme d'un programme implémenté dans une mémoire de l'unité **16** de contrôle) qui détermine la position de la préforme **2T** de tête (en début de production) ou de la préforme **2Q** de queue (en fin de production) en fonction des informations qui lui sont communiquées par le(s) capteur(s) **18.**

Selon un mode de réalisation, le capteur **18** se présente sous forme d'une caméra dont le champ de vision embrasse la totalité de la cavité **8,** et le module de calcul intègre un programme de reconnaissance d'image qui permet de déterminer la position instantanée de la préforme **2T** de tête ou, respectivement, de la préforme **2Q** de queue.

Selon un autre mode de réalisation schématisé sur la **FIG.5**, le système **17** de détection comprend une pluralité de capteurs **18** de présence, disséminés le long du trajet **T** au droit de la cavité **8,** et qui sont configurés, chacun, pour détecter la présence (ou l'absence) d'une préforme **2** dans leur voisinage.

La réception par l'unité **16** de contrôle d'un signal d'absence réitéré sur plusieurs cycles de calcul, suivie de la réception d'un signal de présence, caractérise le passage de la préforme de tête **2T** au voisinage du capteur **18** ayant émis ces signaux.

Inversement, la réception par l'unité **16** de contrôle d'un signal de présence (réitéré sur plusieurs cycles de calcul), suivie de la réception d'un signal d'absence, caractérise le passage de la préforme **2Q** de queue au voisinage du capteur **18** ayant émis ces signaux.

Selon un mode de réalisation, l'unité **16** de contrôle est programmée pour commander, à partir d'un état éteint de tous les émetteurs $E_1...E_N$ :

- l'allumage de l'émetteur $E_{i+1}$ situé immédiatement en aval de la préforme **2T** de tête (détectée présente dans la cellule $C_i$), tandis que les émetteurs $E_{i+2}...E_N$ situés en aval de cet émetteur $E_{i+1}$ sont maintenus éteints et que les émetteurs $E_1...E_{i-1}$ situés en amont de cet émetteur $E_{i+1}$ sont maintenus allumés ;
- puis le maintien de cet état allumé tant que le passage de la préforme **2Q** de queue n'est pas détecté.

De même, l'unité **16** de contrôle peut être programmée pour commander, à partir d'un état allumé de tous les émetteurs $E_1...E_N$, le maintien allumé de l'émetteur $E_{i-1}$ situé immédiatement en amont de la préforme **2Q** de queue (détectée présente dans la cellule $C_i$), tandis que les émetteurs $E_1...E_{i-2}$ situés en amont de cet émetteur $E_{i-1}$ sont éteints et que les émetteurs $E_{i+1}...E_N$ situés en aval de cet émetteur $E_{i-1}$ sont maintenus allumés.

Il a été constaté qu'en régime stationnaire, c'est-à-dire lorsque la cavité **8** est remplie de préformes **2,** le rayonnement émis par chacun des émetteurs $E_1...E_N$ se divise en trois parties :

- une première partie absorbée (c'est l'objectif de la chauffe) par la (ou les) préformes 2 qui se trouve(nt) au droit de l'émetteur $E_i$ ;
- une deuxième partie transmise par la (les) préformes **2** qui se trouve(nt) au droit de l'émetteur $E_i$ ;
- une troisième partie passant au travers des interstices entre les préformes **2**.

La deuxième partie et la troisième partie sont renvoyées vers la cavité **8** par les réflecteurs **13** des émetteurs $E_i$ de la paroi **6** située en regard. Les réflexions peuvent être multiples, jusqu'à absorption (ou atténuation) totale du rayonnement.

Le rayonnement de chaque émetteur $E_i$ n'est pas strictement parallèle mais présente une conicité divergente. Ainsi, dans un plan horizontal, les rayons qui délimitent latéralement le rayonnement forment, avec un axe perpendiculaire à la paroi **6,** un angle généralement compris entre 2° et 20°.

En d'autres termes, la puissance $p_C^i$ électroma-

gnétique rayonnée par un émetteur $E_i$ n'est pas concentrée sur la seule cellule $C_i$, mais se disperse pour partie vers les cellules voisines (au moins $C_{i-1}$ et $C_{i+1}$).

La puissance qui atteint les cellules voisines $C_{i-1}$ et $C_{i+1}$ n'est pas la même selon qu'une préforme est ou non présente dans la cellule $C_i$. Plus précisément, la fraction de puissance qui atteint les cellules voisines $C_{i-1}$ et $C_{i+1}$ lorsqu'aucune préforme n'est présente dans la cellule $C_i$ est supérieure à la fraction de puissance qui atteint ces mêmes cellules lorsqu'aucune préforme n'est présente dans la cellule $C_i$.

C'est ce qui explique que, à supposer que les émetteurs $E_j...E_k$ situés en aval et au voisinage de la préforme $2T$ de tête soient allumés, celle-ci reçoit une puissance électromagnétique supérieure à la puissance (dite efficace) reçue par une préforme $2$ quelconque située au cœur du train.

Pour les mêmes raisons, si les émetteurs $E_l...E_m$ situés en amont de la préforme $2Q$ de queue sont allumés, celle-ci reçoit une puissance électromagnétique supérieure à la puissance efficace.

Le fait d'allumer progressivement les émetteurs $E_j...E_k$ en aval et au voisinage de la préforme $2T$ de tête, ou, respectivement, d'éteindre progressivement les émetteurs $E_l...E_m$ en amont de la préforme $2Q$ de queue, permet de ramener la puissance reçue par la préforme $2T$ de tête, ou, respectivement, par la préforme $2Q$ de queue, à une valeur voisine ou égale à la puissance efficace.

Selon un mode de réalisation illustré sur la **FIG.5,** il est envisageable d'allumer progressivement, d'amont en aval et au fur et à mesure du déplacement du train de préformes $2$, plusieurs émetteurs $E_l...E_m$ situés en aval et au voisinage de la préforme $2T$ de tête, en augmentant progressivement leurs puissances $P_E^k...P_E^l$ électriques fournies respectives à l'approche de la préforme $2T$ de tête jusqu'à atteindre la puissance nominale au plus tôt au passage de celle-ci.

Ainsi, dans l'exemple illustré sur la **FIG.5,** à supposer que la préforme $2T$ de tête soit, à un instant donné, située dans la cellule $C_t$, l'unité **16** de contrôle commande le passage de l'état éteint à l'état allumé des émetteurs $E_{i+1}$ et $E_{i+2}$, avec :

$$0 < K_{i+2} < K_{i+1} < 1$$

Avec, typiquement :

$$10\% \leq K_{i+2} \leq 40\%$$

$$50\% \leq K_{i+1} \leq 80\%$$

Et, par exemple :

$$K_{i+2} \cong 20\%$$

$$K_{i+1} \leq 70\%$$

De la sorte, tout se passe pour la préforme $2T$ de tête comme si elle était une préforme $2$ située au cœur du train, en régime permanent, c'est-à-dire que la préforme $2T$ de tête reçoit la même quantité d'énergie qu'une préforme $2$ située au cœur du train.

Selon un mode de réalisation particulier, l'unité **16** de contrôle peut être programmée pour faire croître de manière continue, d'amont en aval, la puissance $P_E^i$ électrique fournie aux émetteurs $E_l...E_m$ situés en aval et au voisinage de la préforme $2T$ de tête à l'approche de celle-ci, en partant de la valeur nulle pour parvenir, au plus tôt au passage de la préforme $2T$ de tête, à la puissance $P_{Enom}^i$ nominale, comme illustré par la partie droite de la courbe en pointillés sur la **FIG.5.**

De même, selon un mode de réalisation illustré sur la **FIG.5,** il est envisageable d'éteindre progressivement, d'amont en aval, au fur et à mesure du déplacement du train de préformes $2$, plusieurs émetteurs $E_l...E_m$ situés en amont et au voisinage de la préforme $2Q$ de queue, en diminuant progressivement leurs puissances $P_E^l...P_E^m$ électriques fournies respectives au fur et à mesure de l'éloignement de la préforme $2Q$ de queue, en partant de la puissance nominale jusqu'à la valeur nulle (c'est-à-dire jusqu'à l'extinction).

De la sorte, tout se passe pour la préforme $2Q$ de queue comme si elle était une préforme $2$ située au cœur du train, en régime permanent, c'est-à-dire que la préforme $2Q$ de queue reçoit la même quantité d'énergie qu'une préforme $2$ située au cœur du train.

Selon un mode de réalisation particulier, l'unité **16** de contrôle peut être programmée pour faire décroître de manière continue, d'amont en aval, la puissance $P_E^i$ électrique fournie aux émetteurs $E_l...E_m$ situés en amont et au voisinage de la préforme $2Q$ de queue au fur et à mesure de l'éloignement de celle-ci, en partant de la puissance $P_{Enom}^i$ nominale pour parvenir à la valeur nulle, comme illustré par la partie gauche de la courbe en pointillés sur la **FIG.5.**

Il résulte de cette architecture, et de son fonctionnement, que la préforme $2T$ de tête et la préforme $2Q$ de queue (ainsi que les préformes $2$ qui leur sont adjacentes dans le train) reçoivent sensiblement la même quantité d'énergie que les préformes $2$ situés au cœur du train. De la sorte, on évite leur mise au rebut, au bénéfice de la productivité.

En outre, l'allumage progressif des émetteurs $E_1...E_N$ lors du démarrage de la production, et leur extinction progressive lors de la fin de la production, permettent de réaliser quelques économies d'énergie, en minimisant la durée globale d'allumage des émetteurs **E₁...E_N**.

## Revendications

1. Procédé de conditionnement thermique d'un train de préformes (**2**) de récipients en matière plastique au sein d'une unité (**1**) de conditionnement thermique définissant une cavité (**8**) de chauffe et équipée d'une rangée d'émetteurs (**E₁...E_N**) adjacents bordant la cavité (**8**) et comprenant chacun une pluralité de sources de rayonnement électromagnétique monochromatique,

   chaque préforme (**2**) étant fixée à un support (**11**) individuel circulant d'amont en aval le long d'un trajet (**T**) prédéterminé dans la cavité (**8**), le train de préformes (**2**) se terminant côté aval par une préforme (**2T**) de tête ou, côté amont, par une préforme (**2Q**) de queue,

   chaque émetteur (**E_i**) pouvant adopter un état allumé, dans lequel les sources émettent un rayonnement dans la cavité (**8**), et un état éteint, dans lequel les sources n'émettent pas de rayonnement dans la cavité (**8**),

   ce procédé étant **caractérisé en ce qu'**il comporte les opérations suivantes :

   - déterminer périodiquement la position, sur le trajet (**T**), de la préforme (**2T**) de tête ou, respectivement, de la préforme (**2Q**) de queue ;
   - au fur et à mesure du déplacement du train de préformes (**2**), allumer progressivement les émetteurs (**E_j...E_k**) situés en aval et au voisinage de la préforme (**2T**) de tête ou, respectivement, éteindre progressivement les émetteurs (**E_l...E_m**) situés en amont et au voisinage de la préforme (**2Q**) de queue.

2. Procédé selon la revendication 1, **caractérisé en ce que** la détermination de la position de la préforme (**2T**) de tête ou de la préforme (**2Q**) de queue est réalisée au moyen d'un ou plusieurs capteurs (**18**).

3. Procédé selon la revendication 1 ou la revendication 2, **caractérisé en ce qu'**il comprend l'allumage de l'émetteur (**E_{i+1}**) situé immédiatement en aval de la préforme (**2T**) de tête, les émetteurs (**E_{i+2}...E_N**) situés en aval de cet émetteur (**E_{i+1}**) étant maintenus éteints et les émetteurs (**E₁...E_{i-1}**) situés en amont de cet émetteur (**E_{i+1}**) étant maintenus allumés.

4. Procédé selon la revendication 1 ou la revendication 2, **caractérisé en ce qu'**il comprend l'augmentation progressive de puissances ( $P_E^{i+1}...P_E^{i+p}$ ) électriques fournies à plusieurs émetteurs (**E_j...E_k**) situés

en aval et au voisinage de la préforme (**2T**) de tête à l'approche de celle-ci, jusqu'à atteindre une puissance ( $P_{Enom}^{i}$ ) nominale au plus tôt au passage de celle-ci.

5. Procédé selon l'une des revendications précédentes, **caractérisé en ce que** l'état allumé des émetteurs est maintenu tant que le passage de la préforme (**2Q**) de queue n'est pas détecté.

6. Procédé selon l'une des revendications 1 à 5, **caractérisé en ce qu'**il comprend le maintien allumé de l'émetteur (**E_{i-1}**) situé immédiatement en amont de la préforme (**2Q**) de queue, les émetteurs (**E₁...E_{i-2}**) situés en amont de cet émetteur (**E_{i-1}**) étant éteint et les émetteurs (**E_{i+1}...E_N**) situés en aval de cet émetteur (**E_{i-1}**) maintenus allumés.

7. Procédé selon l'une des revendications 1 à 5, **caractérisé en ce qu'**il comprend la diminution progressive des puissances ( $P_E^{i-p}...P_E^{i-1}$ ) électriques fournies à plusieurs émetteurs (**E_l...E_m**) situés en amont et au voisinage de la préforme (**2Q**) de queue au fur et à mesure de l'éloignement de celle-ci, d'une puissance nominale jusqu'à l'extinction.

8. Unité (**1**) de conditionnement thermique de préformes (**2**) de récipients en matière plastique, qui définit une cavité (**8**) de chauffe et est équipée :

   - d'une rangée d'émetteurs (**E₁...E_N**) adjacents bordant la cavité (**8**) et comprenant chacun une pluralité de sources de rayonnement électromagnétique monochromatique, chaque émetteur (**E_i**) pouvant adopter un état allumé, dans lequel les sources émettent un rayonnement dans la cavité (**8**), et un état éteint, dans lequel les sources n'émettent pas de rayonnement dans la cavité (**8**) ;
   - d'une série de supports (**11**) individuels pour les préformes (**2**), circulant d'amont en aval le long d'un trajet (**T**) prédéterminé dans la cavité (**8**) ;

   **caractérisée en ce qu'**elle comprend :

   - un ou plusieurs capteurs (**18**) propre(s) à permettre la détermination périodique de la position, sur le trajet (**T**), d'une préforme (**2T**) de tête, ou, respectivement, d'une préforme (**2Q**) de queue au sein d'un train de préformes (**2**) défilant dans la cavité (**8**) ;
   - une unité (**16**) de contrôle programmée pour allumer progressivement les émetteurs (**E_{i+1}...E_N**) situés en aval et au voisinage de la préforme (**2T**) de tête ou, respectivement, éteindre progressivement les émetteurs (E₁...E₋ᵢ₋₁) situés en amont et au voisinage de la préforme (2Q) de queue.

9. Unité (1) de conditionnement thermique selon la revendication 8, **caractérisée en ce que** les sources sont configurées pour émettre dans le domaine infrarouge.

10. Unité (1) de conditionnement thermique selon la revendication 9, **caractérisée en ce que** les sources sont des diodes VCSEL.

**Patentansprüche**

1. Verfahren zur thermischen Konditionierung eines Satzes von Vorformen (2) von Kunststoffbehältern innerhalb einer Einheit (1) zur thermischen Konditionierung, die einen Heizhohlraum (8) definiert und mit einer Reihe von benachbarten Emittern (E₁ ... E_N) versehen ist, die den Hohlraum (8) umranden und je eine Vielzahl von Quellen einer monochromatischen elektromagnetischen Strahlung enthalten, wobei jede Vorform (2) an einem einzelnen Träger (11) befestigt ist, der entlang eines vorbestimmten Pfads (T) im Hohlraum (8) von stromaufwärts nach stromabwärts umläuft, wobei der Satz von Vorformen (2) stromabwärts in einer Kopf-Vorform (2T) bzw. stromaufwärts in einer Schwanz-Vorform (2Q) endet,
wobei jeder Emitter (Eᵢ) einen eingeschalteten Zustand, in dem die Quellen eine Strahlung in den Hohlraum (8) emittieren, und einen ausgeschalteten Zustand annehmen kann, in dem die Quellen keine Strahlung in den Hohlraum (8) emittieren,
wobei dieses Verfahren **dadurch gekennzeichnet ist, dass** es die folgenden Vorgänge aufweist:

   - periodische Bestimmung der Position der Kopf-Vorform (2T) bzw. der Schwanz-Vorm (2Q) auf dem Pfad (T) ;
   - während der Verschiebung des Satzes von Vorformen (2), progressives Einschalten der Emitter (Eⱼ ·... Eₖ), die sich stromabwärts hinter und in der Nähe der Kopf-Vorform (2T) befinden, bzw. progressives Ausschalten der Emitter (E_l ... E_m), die sich stromaufwärts vor und in der Nähe der Schwanz-Vorform (2Q) befinden.

2. Verfahren nach Anspruch 1, **dadurch gekennzeichnet, dass** die Bestimmung der Position der Kopf-Vorform (2T) oder der Schwanz-Vorform (2Q) mittels eines oder mehrerer Sensoren (18) durchgeführt wird.

3. Verfahren nach Anspruch 1 oder Anspruch 2, **dadurch gekennzeichnet, dass** es das Einschalten des Emitters (Eᵢ₊₁) enthält, der sich direkt stromabwärts hinter der Kopf-Vorform (2T) befindet, wobei die Emitter (Eᵢ₊₂ ... E_N), die sich stromabwärts hinter diesem Emitter (Eᵢ₊₁) befinden, ausgeschaltet gehalten werden, und die Emitter (E₁ ... Eᵢ₋₁), die sich stromaufwärts vor diesem Emitter (Eᵢ₊₁) befinden, eingeschaltet gehalten werden.

4. Verfahren nach Anspruch 1 oder Anspruch 2, **dadurch gekennzeichnet, dass** es die progressive Erhöhung von elektrischen Leistungen ( $P_E^{i+1} ... P_E^{i+p}$ ) enthält, die an mehrere Emitter (Eⱼ ... Eₖ) geliefert werden, die sich stromabwärts hinter und in der Nähe der Kopf-Vorform (2T) bei der Annäherung an diese befinden, bis zum Erreichen einer Nennleistung ( $P_{Enom}^i$ ) frühestens bei deren Durchgang.

5. Verfahren nach einem der vorhergehenden Ansprüche, **dadurch gekennzeichnet, dass** der eingeschaltete Zustand der Emitter aufrechterhalten wird, so lange der Durchgang der Schwanz-Vorform (2Q) nicht erfasst wird.

6. Verfahren nach einem der Ansprüche 1 bis 5, **dadurch gekennzeichnet, dass** es die Aufrechterhaltung des eingeschalteten Zustands des Emitters (Eᵢ₋₁) enthält, der sich direkt stromaufwärts vor der Schwanz-Vorform (2Q) befindet, wobei die Emitter (E₁ ... Eᵢ₋₂), die sich stromaufwärts vor diesem Emitter (Eᵢ₋₁) befinden, ausgeschaltet sind, und die Emitter (Eᵢ₊₁ ... E_N), die sich stromabwärts hinter diesem Emitter (Eᵢ₋₁) befinden, eingeschaltet gehalten werden.

7. Verfahren nach einem der Ansprüche 1 bis 5, **dadurch gekennzeichnet, dass** es die progressive Verringerung von einer Nennleistung bis zum Ausschalten der an mehrere Emitter (E_l ... E_m), die sich stromaufwärts vor und in der Nähe der Schwanz-Vorform (2Q) befinden, gelieferten elektrischen Leistungen ( $P_E^{i-p} ... P_E^{i-1}$ ) in dem Maße enthält, in dem sie sich von dieser entfernen.

8. Einheit (1) zur thermischen Konditionierung von Vorformen (2) von Kunststoffbehältern, die einen Heizhohlraum (8) definiert und ausgestattet ist:

   - mit einer Reihe von benachbarten Emittern (E₁ ... E_N), die den Hohlraum (8) umranden und je eine Vielzahl von Quellen monochromatischer elektromagnetischer Strahlung enthalten, wobei jeder Emitter (Eᵢ) einen eingeschalteten Zustand, in dem die Quellen eine Strahlung in den Hohlraum (8) emittieren, und einen ausgeschalteten Zustand annehmen kann, in dem die Quellen keine Strahlung in den Hohlraum (8) emittieren;
- mit einer Reihe von einzelnen Trägern (11) für die Vorformen (2), die von stromaufwärts nach stromabwärts entlang eines vorbestimmten Pfads (T) im Hohlraum (8) umlaufen;

**dadurch gekennzeichnet, dass** sie enthält:

- einen oder mehrere Sensoren (18), die die periodische Bestimmung der Position einer Kopf-Vorform (2T) bzw. einer Schwanz-Vorform (2Q) innerhalb eines im Hohlraum (8) vorbeilaufenden Satzes von Vorformen (2) auf dem Pfad (T) erlauben können;
- eine Steuereinheit (16), die programmiert ist, progressiv die Emitter ($E_{i+1}$ ... $E_N$) einzuschalten, die sich stromabwärts hinter und in der Nähe der Kopf-Vorform (2T) befinden, bzw. progressiv die Emitter ($E_1$ ... $E_{i-1}$) auszuschalten, die sich stromaufwärts vor und in der Nähe der Schwanz-Vorform (2Q) befinden.

9. Einheit (1) zur thermischen Konditionierung nach Anspruch 8, **dadurch gekennzeichnet, dass** die Quellen konfiguriert sind, im Infrarotbereich zu emittieren.

10. Einheit (1) zur thermischen Konditionierung nach Anspruch 9, **dadurch gekennzeichnet, dass** die Quellen VCSEL-Dioden sind.

**Claims**

1. Method for thermally treating a series of preforms (2) of plastics containers within a thermal treatment unit (1) that defines a heating cavity (8) and is equipped with a row of adjacent emitters ($E_1$...$E_N$) that border the cavity (8) and each comprise a plurality of sources of monochromatic electromagnetic radiation,
each preform (2) being fastened to an individual support (11) circulating from upstream to downstream along a predetermined path (T) in the cavity (8), the series of preforms (2) ending on the downstream side with a head-end preform (2T) or, on the upstream side, with a tail-end preform (2Q),
each emitter ($E_i$) being able to assume an on state, in which the sources emit radiation into the cavity (8), and an off state, in which the sources do not emit radiation into the cavity (8),
this method being **characterized in that** it involves the following operations of:

- periodically determining the position, on the path (T), of the head-end preform (2T) or, respectively, of the tail-end preform (2Q);
- during the movement of the series of preforms (2), progressively switching on the emitters ($E_j$...$E_k$) situated downstream and in the vicinity of the head-end preform (2T) or, respectively, progressively switching off the emitters ($E_l$...$E_m$) situated upstream and in the vicinity of the tail-end preform (2Q) .

2. Method according to Claim 1, **characterized in that** the position of the head-end preform (2T) or of the tail-end preform (2Q) is determined by means of one or more sensors (18).

3. Method according to Claim 1 or Claim 2, **characterized in that** it comprises switching on the emitter ($E_{i+1}$) situated immediately downstream of the head-end preform (2T), the emitters ($E_{i+2}$...$E_N$) situated downstream of this emitter ($E_{i+1}$) being kept off and emitters ($E_1$...$E_{i-1}$) situated upstream of this emitter ($E_{i+1}$) being kept on.

4. Method according to Claim 1 or Claim 2, **characterized in that** it comprises progressively increasing the electric power ( $P_E^{i+1} \dots P_E^{i+p}$ ) supplied to a plurality of emitters ($E_j$...$E_k$) situated downstream and in the vicinity of the head-end preform (2T) as the latter approaches, until reaching a nominal power ( $P_{Enom}^i$ ) at the earliest as the latter passes.

5. Method according to one of the preceding claims, **characterized in that** the on state of the emitters is maintained until the passage of the tail-end preform (2Q) is detected.

6. Method according to one of Claims 1 to 5, **characterized in that** it comprises keeping the emitter ($E_{i-1}$) situated immediately upstream of the tail-end preform (2Q) on, the emitters ($E_1$...$E_{i-2}$) situated upstream of this emitter ($E_{i-1}$) being off and the emitters ($E_{i+1}$...$E_N$) situated downstream of this emitter ($E_{i-1}$) being kept on.

7. Method according to one of Claims 1 to 5, **characterized in that** it comprises progressively decreasing the electric power ( $P_E^{i-p} \dots P_E^{i-1}$ ) supplied to a plurality of emitters ($E_l$...$E_m$) situated upstream and in the vicinity of the tail-end preform (2Q) as the latter moves away, from a nominal power to off.

8. Unit (1) for thermally treating preforms (2) of plastics containers, which defines a heating cavity (8) and is equipped:

- with a row of adjacent emitters ($E_1$...$E_N$) that

border the cavity (8) and each comprise a plurality of sources of monochromatic electromagnetic radiation, each emitter ($E_i$) being able to assume an on state, in which the sources emit radiation into the cavity (8), and an off state, in which the sources do not emit radiation into the cavity (8);

- with a set of individual supports (11) for the preforms (2), which circulate from upstream to downstream along a predetermined path (T) in the cavity (8);

**characterized in that** it comprises:

- one or more sensors (18) suitable for allowing the periodic determination of the position, on the path (T), of a head-end preform (2T) or, respectively, of a tail-end preform (2Q) within a series of preforms (2) passing through the cavity (8);

- a control unit (16) programmed to progressively switch on the emitters ($E_{i+1}...E_N$) situated downstream and in the vicinity of the head-end preform (2T) or, respectively, to progressively switch off the emitters ($E_1...E_{i-1}$) situated upstream and in the vicinity of the tail-end preform (2Q).

9. Thermal treatment unit (1) according to Claim 8, **characterized in that** the sources are configured to emit in the infrared range.

10. Thermal treatment unit (1) according to Claim 9, **characterized in that** the sources are VCSEL diodes.

FIG.1

FIG.2

EP 3 461 616 B1

FIG.3

FIG.4

EP 3 461 616 B1

FIG.5

EP 3 461 616 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3119582 A